# EUROPÄISCHE PATENTSCHRIFT

(11) **EP 0 670 459 B1**
(45) Veröffentlichungstag und Bekanntmachung des Hinweises auf die Patenterteilung: **16.07.1997**
(21) Anmeldenummer: 95101817.5
(22) Anmeldetag: 10.02.1995
(51) Int. Cl.: F24H 9/14, F24H 1/43, F24H 1/52, F24H 8/00, F24H 9/12, F24D 3/10

(54) **Heizgerät für Raumheizung und Brauchwassererwärmung**
Heater for space heating and domestic hot water production
Appareil de chauffage pour la chauffage de locaux et d'eau sanitaire

(30) Priorität: 05.03.1994 DE 4407371
(43) Veröffentlichungstag der Anmeldung: 06.09.1995
(73) Patentinhaber: ROBERT BOSCH GMBH, 70442 Stuttgart (DE)
(72) Erfinder: Schwarz, Hans-Jochen, Dr. Ing., D-73614 Schorndorf (DE); Danner, Klaus, Dipl.-Ing., D-66440 Blieskastel (DE); Zimmermann, Hans-Werner, Dipl.-Ing., D-67663 Kaiserslautern (DE); Klink, Hans-Joachim, Dipl.-Ing., D-73235 Weilheim (DE); Frieling, Thomas-Eckart, Dipl.-Ing., D-70180 Stuttgart (DE)

(56) Entgegenhaltungen:
- EP-A- 0 236 235
- WO-A-84/02387
- DE-A- 1 404 950
- DE-U- 8 703 449
- DE-U- 9 115 909
- GB-A- 2 241 564
- GB-A- 2 246 848

## Beschreibung

### Stand der Technik

Die Erfindung betrifft ein Heizgerät für Raumheizung und Brauchwassererwärmung nach dem Oberbegriff des Hauptanspruchs. Es ist bereits ein Heizgerät bekannt geworden (G 91 15 909.1), bei dem ein Brauchwasserspeicher und ein Ausdehnungsgefäß zu einer an der Geräterückseite angeordneten Baueinheit zusammengefaßt sind. In weiterer Ausgestaltung dient diese Baueinheit als Montageplatte für die übrigen Bauelemente beziehungsweise Aggregate, wie beispielsweise die Gas- und Wasserarmaturen, Pumpen, Ventile, Brenner, Brennkammern, Wärmeübertrager, Strömungssicherung, Gebläse und Zentralelektronik und außerdem als tragendes Element, mit dem das Heizgerät an einer Wand befestigt werden kann. Bei diesem Heizgerät wird durch die Größe der Montageplatte die Größe des gesamten Gerätes sowie die Größe des integrierten Brauchwasserspeichers weitestgehend vorgegeben.
Unterschiedliche Leistungsgrößen und Auslegungstypen führen so zu unterschiedlichen Einbaugrößen, insbesondere bei der Tiefe des Heizgerätes.

### Vorteile der Erfindung

Das erfindungsgemäße Heizgerät mit den Merkmalen des Hauptanspruchs hat den Vorteil einer kompakten Bauweise für einen großen Leistungsbereich und unterschiedliche Auslegungstypen. Es können beispielsweise Heizgeräte mit 5, 11 oder 27 KW bereitgestellt werden, die sich lediglich in ihrer Höhe unterscheiden. Ebenso ist es möglich, unterschiedliche Auslegungstypen wie Niedertemperatur- beziehungsweise Kondensationsheizgeräte oder atmosphärische beziehungsweise gebläseunterstützte Heizgeräte oder kamingebundene beziehungsweise Außenwandheizgeräte zu realisieren. Ferner ist es möglich, durch Auswechseln einzelner Baueinheiten das bereits installierte Heizgerät in andere Leistungsgrößen beziehungsweise andere Auslegungstypen beim Endkunden umzurüsten. Dabei muß beispielsweise lediglich die Brennereinheit oder die Regeleinheit als ganzes ausgetauscht werden, wobei durch die als Steckverbindungen ausgeführten Anschlüsse ein umständliches Entfernen und Wiederanschließen der auszutauschenden Baueinheit entfällt.

Durch die Ausgestaltung selbständiger Baueinheiten wird weiterhin erreicht, daß aufgrund möglicher Mehrverwendungen einzelner Baueinheiten die Teilezahl für die gesamte Familie des Heizgerätes minimiert wird, wodurch auch der Ersatzteillagerbestand gering gehalten werden kann. Außerdem ist es möglich, vormontierte Baueinheiten auf Lager zu halten und auf diese Weise im Notfall schnell reagieren zu können.

Das Zusammenfassen zu Baueinheiten mit standardisierten Anschlüssen ermöglicht es ferner, die Eigenfertigungstiefe dadurch zu verringern, daß ganze Baueinheiten von Zulieferern bezogen werden.

Durch die in den Unteransprüchen aufgeführten Merkmale sind vorteilhafte Weiterbildungen des Heizgerätes nach dem Hauptanspruch möglich.

Eine einheitliche Anschlußeinheit für sämtliche externen und internen Anschlüsse garantiert die Kompatibilität zu allen anderen Baueinheiten und vereinfacht Montageschritte, wenn die Anschlüsse vorwiegend als Steckverbindungen ausgebildet sind. Die Anschlußeinheit selbst ist in vorteilhafter Weise tragendes Element, das beispielsweise an der Wand befestigt wird. Es müssen dann lediglich Halteelemente vorgesehen sein, die ein festes Arretieren der weiteren Baueinheiten auf der Anschlußeinheit ermöglichen.

In vorteilhafter Weise kann eine eigenständige Regeleinheit vorgesehen sein, mit Mitteln zur Kommunikation und für den Regelalgorithmus sowie mit Anschlüssen für Sensoren, Aktoren, wie beispielsweise elektrisch verstellbare Ventilglieder, Drosselklappen, Servomotoren oder ähnliches, und Energiezufuhr. Je nach Gerätetyp, Regelungs- und Bedienungskomfort ist die Regeleinheit mehr oder minder bestückt.

Ferner ermöglicht das Zusammenfassen empfindlicher elektronischer Teile, daß diese in einem schützenden, wasser- und staubdichtem Gehäuse untergebracht werden können. Lediglich standardisierte Steckverbindungen stellen die Verbindung zu den anderen Komponenten des Heizgerätes dar.

Im Reparaturfall kann die gesamte Regeleinheit durch eine funktionstüchtige vorübergehend ersetzt und in der Werkstatt unter optimalen Bedingungen repariert werden.

In einer vorteilhaften Weiterbildung weist die Erwärmungseinheit eine Aufnahme für einen Brenner, einen oder mehrere Wärmeübertrager, eine Brennkammer, Mittel zum Führen der Verbrennungsluft und Mittel zum Führen des Heiz- und/oder Brauchwassers auf und ist steckbar ausgebildet. Ferner können einzelne Komponenten beispielsweise zum Führen des Heiz- und/oder Brauchwassers oder Bauelemente wie Umsteuerventil und Heizpumpe zu einer Hydraulikeinheit innerhalb der Erwärmungseinheit zusammengefaßt sein. Die Hydraulikeinheit stellt dann den Kontakt zur Anschlußeinheit und vorzugsweise auch zur Regeleinheit dar.

Eine kompakte Ausbildung des Heizgerätes wird erreicht, wenn die Erwärmungseinheit einen die Brennkammer umgebenden Speicher aufweist, den ein Ausdehnungsgefäß in Form eines Deckels abschließt. Die Erwärmungseinheit ist bevorzugt zylindrisch ausgebildet mit einem ebenfalls zylindrischen Brenner im Zentrum, den ein wendelförmiger Wärmeübertrager umgibt. Wenn die Verbrennungsluftzufuhr zwischen dem die Brennkammer umschließenden Speicher und einem Außenmantel erfolgt, erhält man einen schalenförmigen Aufbau mit einem von innen nach außen abfallenden Temperaturgradienten, wodurch Wärmeverluste nahezu ohne zusätzliche Dämmung vermieden sind. Außerdem ist ein hoher Grad der Betriebssicherheit gegenüber Leckagen gewährleistet. Dies wird weitergehend dadurch verbessert, daß auch die Abgasführung vollständig von der zugeführten Verbrennungsluft umspült ist.

Mit einem mehrstufigen Wärmeübertrager, dessen erste Stufe aus glattem Rohr und enganliegenden Wendeln zur Aufnahme von Strahlungswärme und dessen zweite Stufe aus beripptem Rohr zur Aufnahme der von den Verbrennungsgasen getragenen Wärme gebildet ist, wird auf kleinstem Raum ein hoher Wirkungsgrad erreicht. Die erste Stufe dient dabei nicht nur der Wärmeaufnahme der Strahlungswärme, sondern auch der Kanalisation der Verbrennungsgase. Soll das Heizgerät in Brennwerttechnik ausgeführt sein, so ist dies einfach durch eine weitere nachgeschaltete dritte Stufe für die Kondensation realisierbar. Der Wärmeübertrager ist an seinen Anschlüssen mit Steckverbindungen ausgestattet und wird beim Zusammenbau der Erwärmungseinheit in entsprechende Anschlüsse der Hydraulikeinheit eingesteckt. Bei einem späteren Austausch des Wärmeübertragers, beispielsweise zum Zwecke einer Leistungsanpassung aufgrund eines gestiegenen oder gesunkenen Wärmebedarfs, müssen nur wenige Teile abgenommen werden, um diesen eingesteckten Wärmeübertrager auszutauschen.

In vorteilhafter Weise ist die Erwärmungseinheit mit einer Aufnahme für einen Brenner ausgestattet, die für unterschiedliche Brennertypen ausgelegt ist und bevorzugt zylindrische Brenner aufnimmt. Zur Befestigung sind stiftförmige Halteelemente vorgesehen, mittels derer der Brenner innerhalb der Brennkammer axial verschiebbar befestigt ist. Auf diese Weise kann je nach Ausführungsart die Abgastemperatur oder die Menge der in den Verbrennungsprozeß zurückgeführten Abgase beeinflußt werden.

Durch einen die Brennkammer umgebenden Speicher, der von einem Ausdehnungsgefäß abgeschlossen ist, ist eine effektive Kühlung der Brennkammerwand möglich, wobei die Abwärme direkt dem Heiz- oder Brauchwasser zugeführt wird. Die sich dadurch ergebende großflächige Wärmeübertragung auf ein kleines Wasservolumen gewährleistet eine rasche Aufheizung und somit einen erhöhten Komfort aufgrund schneller Verfügbarkeit temperierten Wasseres. Da der Speicher auch Teil des Ausdehnuungsgefäßes ist, ergibt sich ein platzsparender schalenförmiger Aufbau, mit Wärme dämmenden Eigenschaften.

Das Heizgerät kann auch einen Brauchwasserspeicher aufweisen, der ebenfalls an die Anschlußeinheit ansteckbar ist und der vorteilhaft als Standfuß ausgebildet sein kann.

### Zeichnung

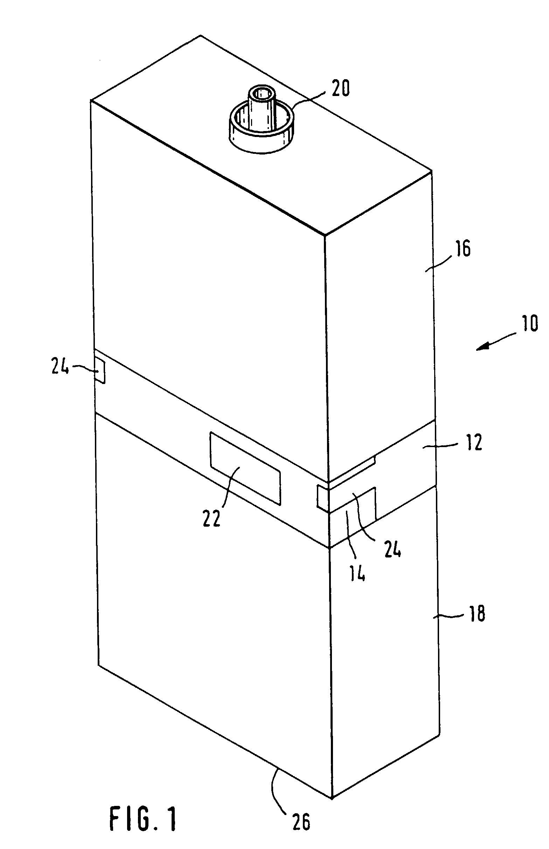

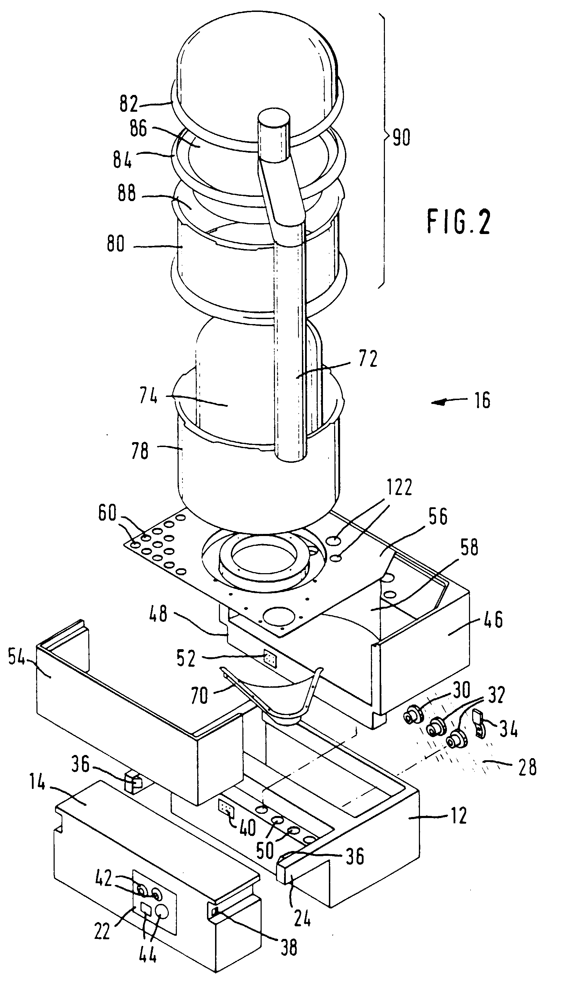

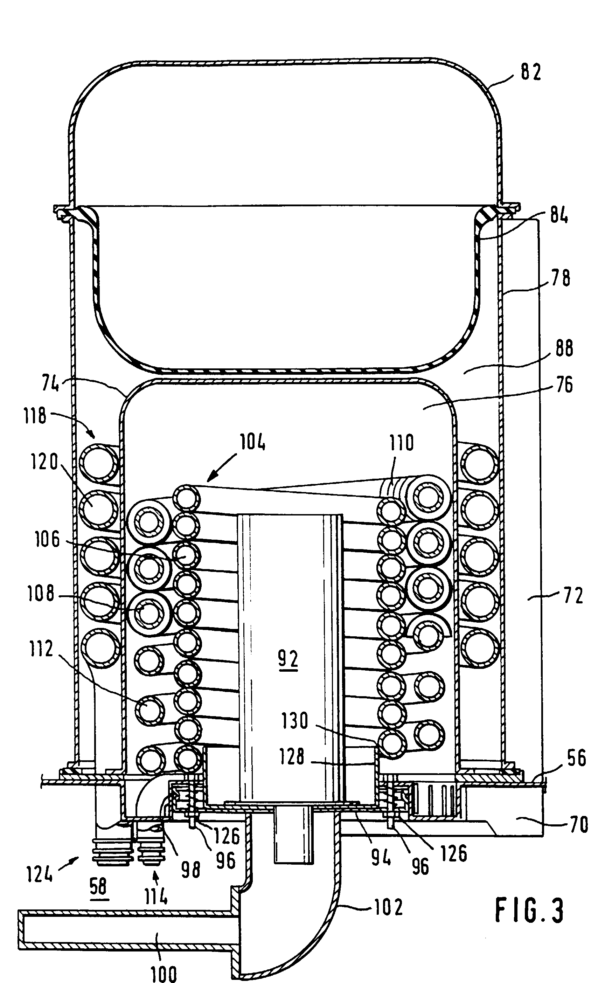

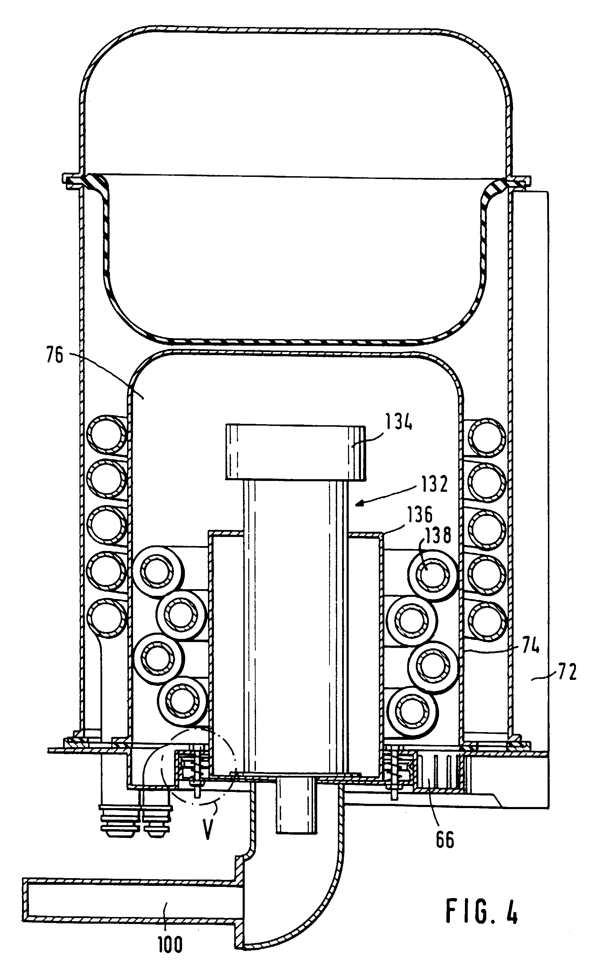

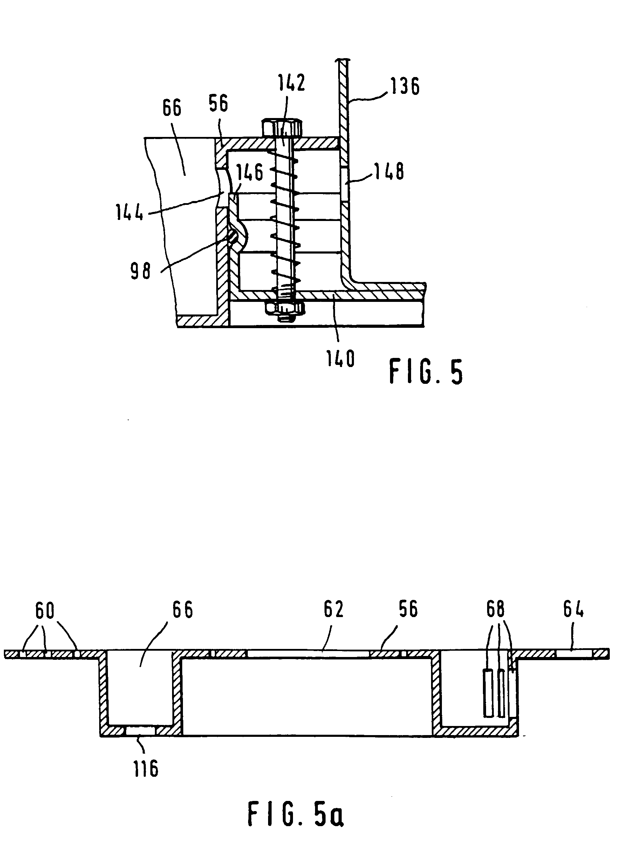

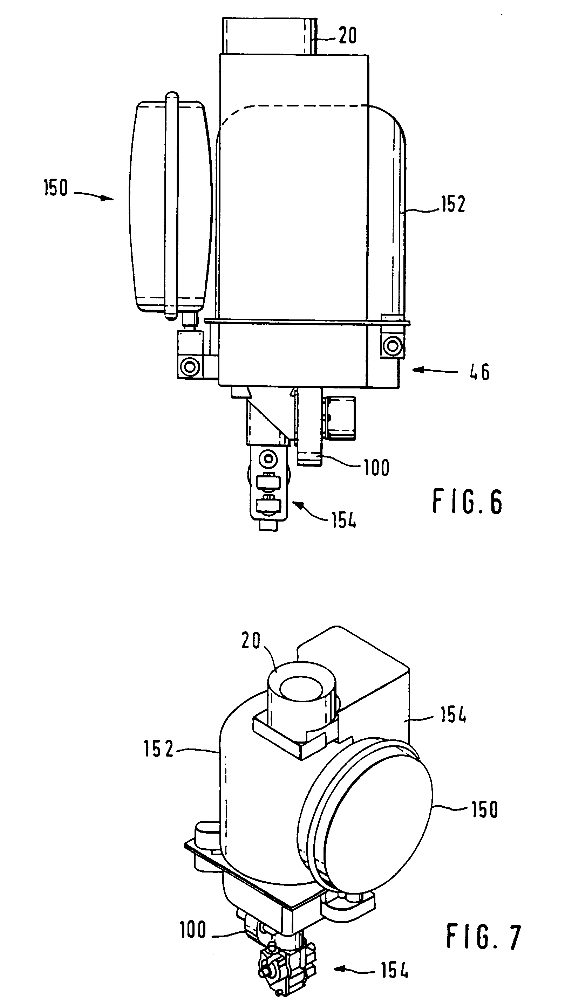

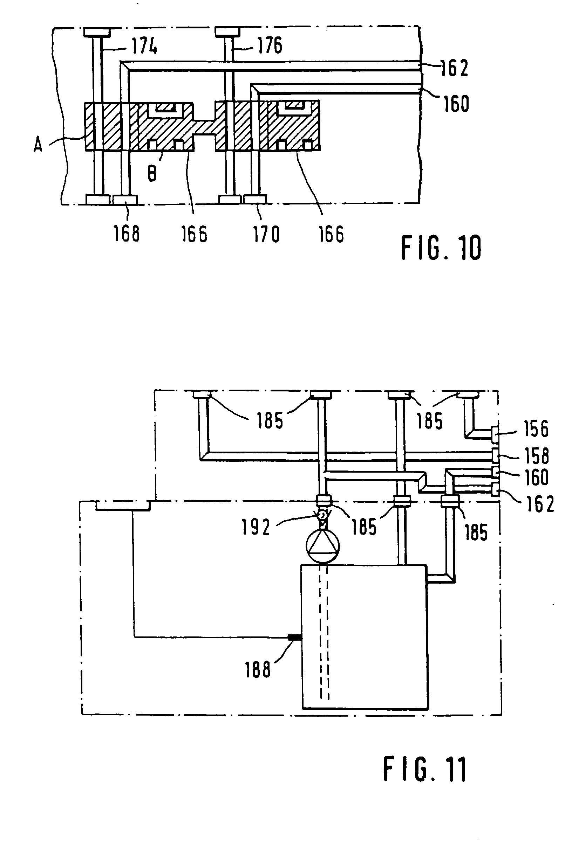

In der Zeichnung sind Ausführungsbeispiele des erfindungsgemäßen Heizgerätes dargestellt und in der nachfolgenden Beschreibung näher erläutert. Es zeigt Figur 1 ein geschlossenes Heizgerät, Figur 2 eine Explosionsdarstellung eines Heizgerätes ohne äußere Schale, Figur 3 einen Schnitt durch einen Teil eines Heizgerätes gemäß einer ersten Ausführungsvariante, Figur 4 einen Schnitt durch einen Teil eines Heizgerätes gemäß einer zweiten Ausführungsvariante, Figur 5 eine Einzelheit V in Figur 4, Figur 6 eine Erwärmungseinheit gemäß einer dritten Variante, Figur 7 eine Schrägdarstellung der Erwärmungseinheit gemäß Figur 6, die Figuren 8 und 9 zwei Hydraulikschemata gemäß weiteren Ausführungsvarianten und Figuren 10 und 11 Details einer internen Leitungsführung.

### Beschreibung

In Figur 1 ist ein Heizgerät 10 gezeigt mit einer Anschlußeinheit 12, einer Regeleinheit 14, einer Erwärmungseinheit 16 und einem Brauchwasserspeicher 18. Auf der oberen Stirnfläche trägt das Heizgerät 10 einen Frischluftabgasanschluß 20 und an der vorderen Seite weist die Regeleinheit 14 ein Bedienfeld 22 auf.

Die Regeleinheit 14 ist von vorne auf die Anschlußeinheit 12 aufgesteckt, wozu die Anschlußeinheit 12 Führungsschienen 24 aufweist, die als erste Halteelemente dienen.

Die Anschlußeinheit 12 ist an einer Wand befestigt und an die aus der Wand austretenden Anschlüsse für Gas, Heiz- und Brauchwasser sowie Strom angeschlossen. Dies erfolgt bei entsprechenden, vorbereiteten Anschlüssen direkt und bei älteren Anschlüssen über Adapterelemente.

Auf die zusammengebaute Anschlußeinheit 12 und Regeleinheit 14, die zusammen die Größe der Grundfläche 26 vorgeben, ist ein Mantel der Erwärmungseinheit 16 auf- und ein Mantel des Brauchwasserspeichers 18 untergestellt. Das Heizgerät 10 weist auf diese Weise eine einheitliche Grundfläche 26 auf, die auch für unterschiedliche Leistungstypen und Auslegungsvarianten innerhalb der Familie des Heizgerätes 10 gleichbleibt.

In Figur 2 ist eine Explosionsdarstellung eines Heizgerätes 10 mit einer Anschlußeinheit 12, einer Regeleinheit 14 sowie einer Erwärmungseinheit 16 ohne Mantel und ohne Brauchwasserspeicher 18 dargestellt.

Die Anschlußeinheit 12 ist mit aus einer Wand 28 austretenden Anschlüssen für Gas 30, Vor- und Rücklauf 32, Kalt- und Warmwasser (in Figur 2 verdeckt) sowie mit einem Elektroanschluß (in Figur 2 verdeckt) verbunden. Ferner ist die Anschlußeinheit 12 durch Halteelemente 34 an der Wand befestigt. Die Anschlüsse für Vor- und Rücklauf 32 sowie Kalt- und Warmwasser sind bevorzugt als Steckelemente ausgebildet, beispielsweise in Form von gestauchten Rohrbunden und aufgeweiteten Rohrenden.

Bei einem derartigen Anschluß weist ein Rohrende Rohrbunde auf, die durch gestauchte, aneinander anliegende Wandungsbereiche gebildet sind. Die Anzahl, die Größe und der Abstand der Rohrbunde ist in weiten Grenzen variabel. Vorteilhaft besitzt das Rohr drei Rohrbunde, wobei zwischen zwei benachbarten Rohrbunden eine Dichtung in Form eines O-Rings nachträglich oder bereits während der Fertigung eingelegt ist und zumindest ein weiterer Rohrbund, der zur Sicherung der Rohrverbindung Verwendung findet, beispielsweise durch einen Splint, eine Klammer oder einen Hakenspringring.

Mit der Regeleinheit 14 ist die Anschlußeinheit 12 über Führungsschienen 24 verbunden, wobei eine Arretierung durch hakenförmige Halteelemente 36 an den Führungsschienen 24, die in entsprechende Auskerbungen 38 der Regeleinheit 14 greifen. Selbstverständlich können hier auch Schraubtechniken zur Befestigung eingesetzt werden. Beim Aufschieben der Regeleinheit 14 auf die Anschlußeinheit 12 wird auch der elektrische Kontakt mittels eingearbeiteter Steckverbindungen 40 geschlossen.

Die Regeleinheit 14 enthält eine Regelungselektronik, (nicht dargestellt), mechanische Stellglieder 42 sowie gegebenenfalls digitale und analoge Anzeigeinstrumente 44.

Die Erwärmungseinheit 16 weist eine nur schematisch dargestellte Hydraulikeinheit 46 auf, die auf die Anschlußeinheit 12 aufsteckbar ist und hierfür mindestens ein absatzförmiges Halteelement 48 aufweist. In dieses Halteelement 48 sind die Anschlüsse für Vor- und Rücklauf sowie Kalt- und Warmwasser eingearbeitet, die ebenfalls die Form der bereits erwähnten Steckelemente aufweisen können und mit entsprechenden Anschlüssen 50 der Anschlußeinheit 12 korrespondieren. Diese Anschlüsse werden folglich ebenfalls beim Aufstecken der Hydraulikeinheit 46 auf die Anschlußeinheit 12 geschlossen. Ferner weist die Hydraulikeinheit 46 elektrische Verbindungsmittel 52 auf, die mit entsprechenden elektrischen Verbindungsmitteln der Regeleinheit 14 korrespondieren und beim Aufschieben der Regeleinheit 14 auf die Anschlußeinheit 12 und Hydraulikeinheit 46 geschlossen werden.

Die Hydraulikeinheit 46 ist nach vorne offen und wird nach dem Aufstecken auf die Anschlußeinheit 12 mit einem Luftkastendeckel 54 nach vorne und einem profilierten Zwischendeckel 56 nach oben abgeschlossen. Dadurch bildet sich in der Hydraulikeinheit 46 ein Hohlraum 58, in den Frischluft durch Öffnungen 60 im Zwischendeckel 56 innerhalb des äußeren Mantels der Erwärmungseinheit 16 durch den Frischluft-/Abgasanschluß 20 gelangen kann. Dieser profilierte Zwischendeckel 56 (Figur 5a) weist ferner eine zentrale Öffnung 62 zur Aufnahme eines Brenners und eine weitere Öffnung 64 auf. Ferner ist ein zylindrisch um die Öffnung 62 angeordneter Ringkanal 66 ausgebildet, der in der Nähe der Öffnung 64 mit länglichen Öffnungen 68 durchbrochen ist. Im Ringkanal 66 werden im Betrieb des Heizgerätes 10 die Abgase gesammelt und über die Öffnungen 68 durch einen Luftleitdeckel 70 (Figur 2) der Öffnung 64 zugeführt. Von dort gelangt das Abgas über ein Abgasrohr 72 zum Frischluft-/Abgasanschluß 20.

Auf dem Zwischendeckel 56 sitzt eine durch einen unten offenen Topf 74 begrenzte Brennkammer 76, die ihrerseits von einem ersten Zylinder 78, einem zweiten Zylinder 80 und einem gewölbten Deckel 82 umschlossen ist. Zwischen dem zweiten Zylinder 80 und dem Deckel 82 ist eine Membran 84 eingespannt, die einen oberen Raum 86 von einem unteren, die Brennkammer umgebenden Raum 88 trennt.

Der zweite Zylinder 80, der Deckel 82 und die Membran 84 bilden zusammen ein Ausdehnungsgefäß 90, das an den als Heizwasserspeicher ausgebildeten unteren Raum 88 angrenzt.

Je nach Leistungsvariante können ein oder mehrere Zylinder 78, 80 vorgesehen sein.

In Figur 3 ist eine Erwärmungseinheit 16 ohne Hydraulikeinheit 46 dargestellt, die im wesentlichen den gleichen Aufbau wie in Figur 2 besitzt, jedoch nur einen Zylinder 78 aufweist, an den sich direkt die Membran 84 und der Deckel 82 anschließt.

In der Brennkammer 76 ist ein Brenner 92 angeordnet, der über ein Halteblech 94 und Schrauben 96 am Zwischendeckel 56 befestigt ist. Zur Abdichtung ist zwischen dem Halteblech 94 und dem Zwischendeckel 56 eine Dichtung 98 eingebracht.

Der Brenner 92 wird über ein Gebläse 100 und einen Krümmer 102 mit einem Gemisch aus Luft und Brenngas gespeist. Die nötige Frischluft saugt das Gebläse 100 direkt aus dem Hohlraum 58 an. Das Brenngas wird mit einer nicht näher beschriebenen Vorrichtung zugemischt.

In der Brennkammer 76 befindet sich ein wendelförmiger Wärmeübertrager 104 mit einer ersten Stufe aus glattem Rohr 106, die den Brenner 92 symmetrisch umgibt und deren Wendel enganliegend ausgestaltet ist. Diese erste Stufe ist direkt verbunden mit einer zweiten Stufe aus beripptem Rohr 108, dessen Lamellen beziehungsweise Rippen 110 in Figur 3 nur angedeutet sind. An diese zweite Stufe schließt sich eine dritte Stufe aus korrosionsfestem Rohr 112 an.

An den Anschlußenden weist der Wärmeübertrager 104 Steckverbindungen 114 auf, mit denen eine wasserdichte Verbindung zwischen Wärmeübertrager 104 und Hydraulikeinheit 46 geschlossen werden kann. Die Enden des Wärmeübertragers 104 sind dazu durch Öffnungen 116 im Zwischendeckel 56 durchgeführt.

Außerhalb der Brennkammer 76 im Raum 88 ist ein weiterer wendelförmiger Wärmeübertrager 118 angeordnet, der aus glattem Rohr 120 besteht und mittels durch Öffnungen 122 (Figur 2) durch den Zwischendeckel 56 durchgeführten Steckverbindungen 124 mit der Hydraulikeinheit 46 verbunden ist. Im Raum 88 befindet sich Heizwasser, das den Wärmeübertrager 118 umspült. Dazu ist der Raum 88 durch nicht dargestellte Steckverbindungen ebenfalls mit der Hydraulikeinheit 46 verbunden.

Im Betrieb liefert der Brenner 92 Wärmeenergie zum Teil als Strahlungsenergie, die vom glatten Rohr 106 der ersten Stufe des Wärmeübertragers 104 aufgenommen wird und zum anderen Teil heiße Verbrennungsgase, die entlang der ersten Stufe des Wärmeübertragers 104 zum obenliegenden Boden des Topfes 74 der Brennkammer 76 geführt, dort umgelenkt werden und zu den Lamellen beziehungsweise Rippen 110 des berippten Rohres 108 gelangen und ihre Wärme abgeben. In der dritten Stufe werden die Verbrennungsgase bis unter den Taupunkt abgekühlt und die freiwerdende Kondensationswärme an das den Wärmeübertrager 104 durchströmende Heizwasser übertragen.

Der Wärmeübertrager 118 wird vom Brauchwasser durchströmt, das direkt oder über einen Speicher gezapft werden kann.

Der Brenner 92 ist über die Schrauben 96 axial verschiebbar gehalten, zum Beispiel dadurch, daß die Muttern 126 am Halteblech 94 festsitzen und die Schrauben 96 drehbar sind oder umgekehrt. Durch das axiale Verschieben des Brenners 92 verschiebt sich ebenfalls ein am Halteblech 94 befestigter Zylinder 128, dessen obere Kante einen Ringspalt 130 freigibt beziehungsweise vergrößert, wenn der Brenner 92 aus der Brennkammer 76 herausbewegt wird. Dadurch kann ein Teil der Verbrennungsgase direkt in den Ringkanal 66 und über das Abgasrohr 72 in den nicht dargestellten Schornstein gelangen. Auf diese Weise ist es möglich, die Abgastemperatur in gewissen Grenzen einzustellen und einer Kaminversottung vorzubeugen.

In Figur 4 ist ebenfalls eine Erwärmungseinheit 16 ohne Hydraulikeinheit 46 dargestellt, die ähnlich der in Figur 3 dargestellten aufgebaut ist und sich lediglich im Bereich der Brennkammer 76 und Wärmeübertrager unterscheidet.

In der Brennkammer 76 ist ein Brenner 132 mit einem Brennerkopf 134 und einen den Brenner 132 teilweise umgebenden, geschlossenen Zylinder 136 gezeigt. Der Brenner 132 wird über ein Gebläse 100 mit Verbrennungsluft und Brenngas versorgt, das über den Brennerkopf 134 in der Brennkammer 76 verbrannt wird. Die heißen Brenngase gelangen über einen wendelförmigen Wärmeübertrager 138, geführt zwischen der Brennkammerwand des Topfes 74 und dem Zylinder 136 zum Ringkanal 66 und somit über das Abgasrohr 72 ins Freie. Der Brenner 132 ist über ein Halteblech 140 mittels Schrauben 142 am Zwischendeckel 56 axial verschiebbar befestigt (Figur 5). An einer dem Zylinder 136 zugewandten Wandstelle des Ringkanals 66 weist dieser eine oder mehrere Durchgangsöffnungen 144 auf, die von einem am Halteblech 140 angeformten Kragen 146 teilweise bedeckt werden. Durch axiales Verschieben des Brenners 132 und damit letztlich des Kragens 146 werden die Durchgangsöffnungen 144 mehr oder weniger freigegeben. Auf diese Weise gelangt mehr oder weniger Verbrennungsgas durch die Öffnungen 144 und weitere Öffnungen 148 im Zylinder 136 zum Brenner 132 und können dem unverbrannten Brenngasgemisch zugeführt werden.

Bei der Montage der vorbeschriebenen Erwärmungseinheiten 16 werden die Einzelteile miteinander verbunden, in dem die Zylinder 78, 80 der Wärmeübertrager 104 beziehungsweise 138 und der Brenner 92 beziehungsweise 132 am Zwischendeckel 56 befestigt beziehungsweise durch ihn durchgesteckt werden. Nach Aufsetzen des Topfes 74, Einstecken des Wärmeübertragers 118 und Befestigen der Membran 84 und des Deckels 82 wird diese Einheit auf die Hydraulikeinheit gesteckt. Die Brenner sind dabei komplett vormontiert, das heißt mit Gebläse und Gasarmatur. Dann werden noch Abgasrohr 72, Luftleiteinrichtung 70 und Luftkastendeckel 54 angebracht.

Eine weitere Variante ist in den Figuren 6 und 7 schematisch dargestellt. Das Ausdehnungsgefäß 150 ist seitlich an der Hydraulikeinheit 46 befestigt und eine dem Topf 74 ähnliche Haube 152 zur Begrenzung des Raumes 88 aufgesetzt. Die Frischluftzufuhr erfolgt über einen Schacht 154, in dem auch das Abgas zum Frischluft-/Abgasanschluß 20 geführt ist. In den Figuren 6 und 7 ist auch ein Gebläse 100 sowie eine Brenngasarmatur 154 gezeigt.

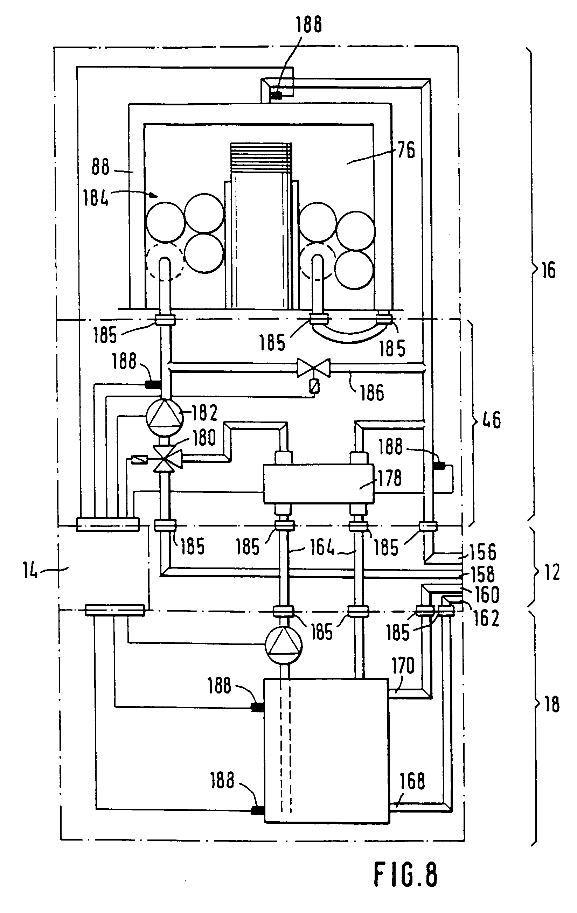

In Figur 8 ist ein weiteres Ausführungsbeispiel eines Heizgerätes 10 in Form eines Hydraulikschemas aufgezeigt, mit einem außerhalb des Raumes 88 angebrachten Sekundärwärmeübertragers 178. Die Form der einzelnen Bauteile ist dabei nur skizziert und Anschlüsse für Brenngas, Abgas, Frischluft und elektrischen Strom zur besseren Übersicht nicht gezeichnet.

Für Wasserkreisläufe weist die Anschlußeinheit 12 einen Vorlaufanschluß 156 und einen Rücklaufanschluß 158 für das Heizwasser sowie einen Warmwasseranschluß 160 und einen Kaltwasseranschluß 162 für das Brauchwasser auf. Diese Anschlüsse sind als interne Anschlüsse zur Hydraulikeinheit 46 und zum Brauchwasserspeicher 18 weitergeführt. Ferner durchdringen zwei interne Leitungen 164 die Anschlußeinheit 12 und stellen eine Verbindung zwischen der Hydraulikeinheit 46 und dem Brauchwasserspeicher 18 dar. Ist kein Brauchwasserspeicher vorgesehen, werden durch Stopfen, Rohrbögen oder Ventile die entsprechenden Leitungen innerhalb der Anschlußeinheit 12 abgedichtet oder umgeleitet.

Eine Möglichkeit, eine solche Umstellung mittels zwei miteinander verbundener Schiebeventile 166 mit jeweils vier Anschlüssen und zwei Stellungen sind in Figur 10 schematisch gezeigt.

In der dargestellten Stellung A wird der Kaltwasseranschluß 162 mit dem Kaltwasserspeicheranschluß 168 verbunden. Ferner ist der Warmwasseranschluß 160 mit dem Warmwasseranschluß 170 des Speichers verbunden. Über die interne Leitung 174 wird kühles Wasser dem Speicher 18 entnommen, der Erwärmungseinheit 16 zugeführt, erwärmt und über die Leitung 176 in den Speicher 18 zurückgeführt.

Ist kein Speicher 18 vorgesehen, werden die Ventile 166 in die Stellung B gebracht und damit das kalte Wasser vom Anschluß 162 direkt in die Leitung 174 und damit zum Erwärmen in die Erwärmungseinheit 16 gebracht und über die Leitung 176 direkt zum Warmwasserauslaß 160. Das Heizgerät 10 arbeitet dann im Brauchwasserbetrieb als Durchlauferhitzer. Derart ausgestaltet kann die Anschlußeinheit 12 einheitlich für unterschiedlichste Auslegungstypen innerhalb der Gerätefamilie eingesetzt werden beziehungsweise können nachträgliche Um- oder Anbauten erfolgen.

In Figur 11 ist eine mögliche Leitungsführung gezeigt, bei der auf eine Ventilanordnung verzichtet werden kann. Der Speicher ist dazu mit einem Rückschlagventil 192 ausgestattet. Für einen Betrieb ohne Speicher 18 müssen hier jedoch die entsprechenden Leitungen verschlossen beziehungsweise von außen umgelenkt werden (nicht dargestellt).

Gemäß Figur 8 sind die internen Leitungen 164 respektive 174, 176 an einen Sekundärwärmeübertrager 178 angeschlossen, der seinerseits vom Heizwasser durchflossen wird.

Der Rücklauf 158 ist an ein in der Hydraulikeinheit 46 angeordnetes Umsteuerventil 180 angeschlossen und führt von dort über eine Umwälzpumpe 182 zum Wärmeübertrager 184. Dieser ist als Doppelwendel ausgeführt und in der Brennkammer 76 angeordnet. Die Auslaßseite des Wärmeübertragers 184 ist mit dem Raum 88 (nur schematisch dargestellt) verbunden, an dessen höchster Stelle die Vorlaufleitung 156 abzweigt. Diese ist durch die Hydraulikeinheit 46 mit der Anschlußeinheit 12 verbunden. Sämtliche Verbindungen 185 zwischen den einzelnen Baueinheiten 12, 16, 18, 48 sind in Stecktechnik, wie bereits beschrieben, ausgeführt.

Ein ventilgesteuerter Bypass 186 ist zwischen Vor- und Rücklauf 156/158 vorgesehen. Mit dem Umsteuerventil 180 kann die dem Sekundärwärmeübertrager 178 zu- und abgeführte Heizwassermenge geregelt werden. Außerdem ist es durch diesen Bypass 186 möglich, dem Vorlaufwasser kaltes Rücklaufwasser beizumischen und so niedrige Vorlauftemperaturen ohne Kondensation am Wärmebertrager 184 zu erreichen.

Zur Regelung des Heizgerätes 10 sind mehrere Temperaturfühler 188 vorgesehen und mit der Regeleinheit 14 verbunden, ebenso sind die Aktoren für die Ventile und Pumpen an die Regeleinheit 14 angeschlossen.

Die Regeleinheit 14 erkennt die Gerätekonfiguration entweder an einer manuellen Einstellung, durch Mehr- oder Minderbelegung einzelner Steckverbindungen oder durch einen mechanischen Code, der beispielsweise in Form von Erhebungen und Vertiefungen beim Zusammenbauen des Heizgerätes 10 entsprechende Schaltstufen betätigt.

Das Heizgerät 10 der Figur 8 wird in bekannter Weise betrieben, derart, daß beim Anfahren des Heizgerätes 10 aus kaltem Zustand der Bypass 186 offen ist, um ein möglichst schnelles Hochheizen und Durchfahren des Taupunktes innerhalb der Brennkammer 76 zu erreichen. Überschreitet die Vorlauftemperatur vorbestimmte Grenzwerte, können Brauchwasser- und Heizwasserregelung in Gang gesetzt werden und bei weiterer Erhöhung der Vorlauftemperatur die Brennerleistung stetig gedrosselt werden.

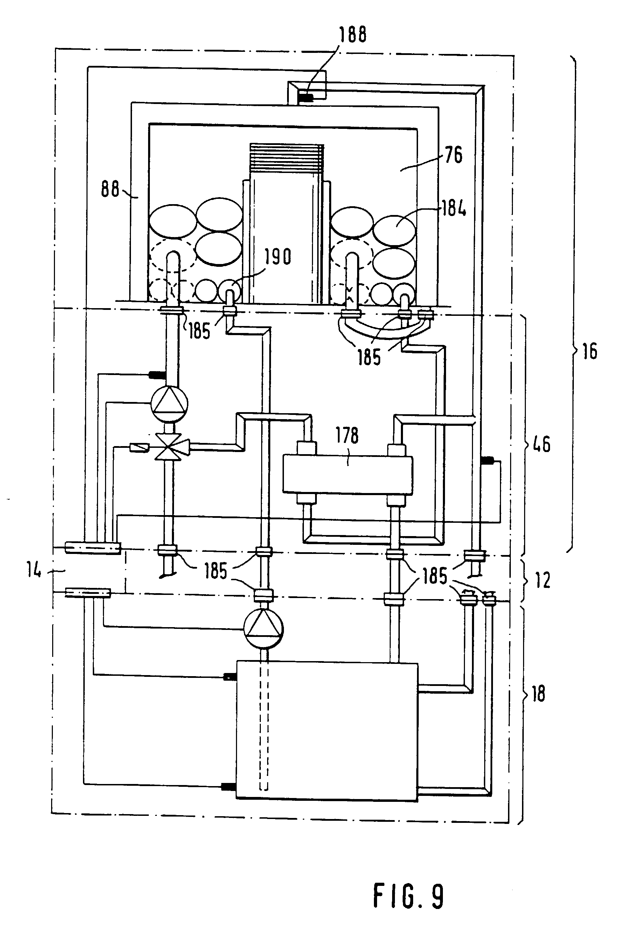

Beim Heizgerät 10 entsprechend Figur 9 ist in der Brennkammer 76 ein weiterer, spiralförmiger Wärmeübertrager 190 angeordnet, an den das dem Brauchwasserspeicher 18 entnommene kühle Wasser durch die bereits abgekühlten Abgase erwärmt wird, beispielsweise bis in den Kondensationsbereich der Abgase. Diese Anordnung gestattet es, die Kondensationswärme auch im reinen Brauchwasserbetrieb oder im Heizbetrieb trotz noch nicht vollständig erwärmten Speicher auszunutzen.

Der Ausgang des Wärmeübertragers 190 ist an den Sekundärwärmeübertrager 178 angeschlossen, der die restliche Wärme auf das Brauchwasser überträgt und das gewünschte Temperaturniveau von beispielsweise 60°C erzeugt. Die Leitungsführung erfolgt innerhalb der Hydraulikeinheit 46, so daß die Anschlußeinheit 12 von dieser Maßnahme nicht berührt wird.

Insgesamt zeichnet sich das Heizgerät 10 dadurch aus, daß, wie beschrieben, unterschiedliche Gerätevariationen und Leistungstypen im Baukastensystem einfach montierbar sind, viele gleiche Teile aufweisen und auch ein Um- oder Anbau beim Endverbraucher problemlos realisierbar ist.

## Patentansprüche

1. Heizgerät für Raumheizung und Brauchwassererwärmung, das einen Brenner, einen von Verbrennungsgasen beaufschlagten Wärmeübertrager, ein inneres Leitungsnetz, Mittel zum Führen der Zu- und Abluft und Mittel zum Regeln der Heizleistung und/oder der Heiz- und/oder Brauchwassertemperatur aufweist, dadurch gekennzeichnet, daß mindestens eine Anschlußeinheit (12), eine Regeleinheit (14) und eine Erwärmungseinheit (16) als selbständige Baueinheiten ausgebildet sind, die untereinander vorwiegend mittels Steckelementen (24, 32, 34, 38, 40, 48, 50, 52, 114, 124, 185) verbindbar, einzeln austauschbar und in ihrer Größe und Anordnung so gestaltet sind, daß unterschiedliche Leistungsgrößen oder Auslegungstypen zumindest die gleiche Grundfläche (26) aufweisen.

2. Heizgerät nach Anspruch 1, dadurch gekennzeichnet, daß die Anschlußeinheit (12) für interne und externe Anschlüsse mindestens einen Gasanschluß (30), Anschlüsse (30, 32, 50, 156, 158, 160, 162) für Vor- und Rücklauf sowie Kalt- und Warmwasser, einen Elektoanschluß (40, 52) und Aufnahmen (24) für weitere Baueinheiten aufweist.

3. Heizgerät nach Anspruch 2, dadurch gekennzeichnet, daß mit Ausnahme des Gasanschlusses (30) die weiteren Anschlüsse (32, 40, 50, 52, 156, 158, 160, 162) als Steckverbindungen ausgebildet sind.

4. Heizgerät nach Anspruch 2, dadurch gekennzeichnet, daß die Anschlußeinheit (12) weitere Baueinheiten tragend aufnimmt und daß Halteelemente (34, 36, 38) vorgesehen sind, die ein Befestigen weiterer Baueinheiten sowie das Befestigen der Anschlußeinheit an einer Wand (28) erlauben.

5. Heizgerät nach einem der vorhergehenden Ansprüche, dadurch gekennzeichnet, daß die Regeleinheit (14) mindestens ein Bedienfeld (22), eine Regelungselektronik, mechanische Stellglieder (42) sowie Anschlüsse (40, 52) für Sensoren, Aktoren und Energiezufuhr aufweist.

6. Heizgerät nach Anspruch 5, dadurch gekennzeichnet, daß die Regeleinheit (14) auf die Anschlußeinheit (12) aufsteckbar ist und beim Aufstecken die Anschlüsse (40) geschlossen werden.

7. Heizgerät nach einem der vorhergehenden Ansprüche, dadurch gekennzeichnet, daß die Erwärmungseinheit (16) eine Aufnahme für einen Brenner (92, 132), einen oder mehrere Wärmeübertrager (104, 118, 138, 184, 190), eine Brennkammer (76), Mittel (10, 66, 70, 72) zum Führen der Verbrennungsluft und Mittel (156, 158, 186) zum Führen des Heiz- und/oder Brauchwassers aufweist.

8. Heizgerät nach Anspruch 7, dadurch gekennzeichnet, daß die Mittel (19, 158, 186) zum Führen des Heiz- und/oder Brauchwassers zu einer Hydraulikeinheit (46) zusammengefaßt sind, die auf die Anschlußeinheit (12) aufsteckbar ist und die auch Bauelemente wie Umsteuerventil (180) und Heizwasserpumpe (182) aufnimmt.

9. Heizgerät nach Anspruch 8, dadurch gekennzeichnet, daß die Hydraulikeiheit (46) einen Anschluß für ein Ausdehnungsgefäß (150) aufweist.

10. Heizgerät nach Anspruch 7, dadurch gekennzeichnet, daß die Erwärmungseinheit (16) einen die Brennkammer (76) umgebenden Speicher (88) aufweist, den ein Ausdehnungsgefäß in Form eines Deckels abschließt.

11. Heizgerät nach Anspruch 7, dadurch gekennzeichnet, daß die Verbrennungsluftzufuhr zwischen dem die Brennkammer (76) umgebenden Speicher (88) und einem Außenmantel erfolgt.

12. Heizgerät nach Anspruch 7, dadurch gekennzeichnet, daß die Erwärmungseinheit (16) zylindrisch ausgebildet ist, in deren Zentrum ein zylindrischer Brenner (92, 132) angeordnet ist, den ein wendelförmiger Wärmeübertrager (104, 138, 184, 190) umgibt.

13. Heizgerät nach Anspruch 12, dadurch gekennzeichnet, daß der Wärmeübertrager (104) mehrstufig aufgebaut ist, mit mindestens einer ersten Stufe aus glattem Rohr (106) und eng anliegenden Wendeln zur Aufnahme von Strahlungswärme und einer zweiten Stufe aus beripptem oder mit Lamellen versehenen Rohr (108) zur Aufnahme der von den Verbrennungsgasen getragenen Wärme.

14. Heizgerät nach Anspruch 13, dadurch gekennzeichnet, daß der Wärmeübertrager eine dritte Stufe aus korrosionsfestem Rohr (112) aufweist zur Aufnahme von Kondesationswärme.

15. Heizgerät nach Anspruch 12, dadurch gekennzeichnet, daß ein weiterer wendelförmiger Wärmeübertrager (118) zur Brauchwassererwärmung vorgesehen ist, der den ersten Wärmeübertrager (104, 138) zylindrisch umgibt.

16. Heizgerät nach einem der Ansprüche 12 bis 15, dadurch gekennzeichnet, daß der erste und/oder zweite Wärmeübertrager (104, 118, 138, 184, 190) mit der Hydraulikeinheit (46) steckbar verbunden und einzeln austauschbar ausgestaltet ist/sind.

17. Heizgerät nach Anspruch 7 oder 12, dadurch gekennzeichnet, daß der Brenner (92, 132) mittels stiftförmigen Halteelemente (142) in der Brennkammer (76) axial verschiebbar befestigt ist, daß die Verbrennungsgase in der Brennkammer (76) umgelenkt und unterhalb des Brenners (92, 132) gesammelt werden und durch Verschieben des Brenners (92, 132) ein in der Größe variierbarer Ringspalt (130) erzeugbar ist, durch den Verbrennungsgase am Wärmeübertrager (104, 138, 184) vorbeileitbar sind.

18. Heizgerät nach Anspruch 7 oder 12, dadurch gekennzeichnet, daß der Brenner (92, 132) mittels stiftförmiger Halteelemente (142) in der Brennkammer (76) axial verschiebbar befestigt ist, daß die Verbrennungsgase in der Brennkammer (76) umgelenkt und unterhalb des Brenners (92, 132) gesammelt werden und durch Verschieben des Brenners (92, 132) in der Größe variierbare Durchgänge (144) erzeugbar sind, durch die Verbrennungsgase dem Verbrennungsprozeß wiederzuführbar sind.

19. Heizgerät nach einem der vorhergehenden Ansprüche, gekennzeichnet durch einen Brauchwasserspeicher (18), der als Standbein ausgebildet ist und auf den weitere Baueinheiten aufsteckbar sind.

## Claims

1. Heating appliance which is intended for room heating and domestic-water heating and has a burner, a heat exchanger which is acted upon by combustion gases, an internal conduit network, means for channelling the supply air and discharge air, and means for regulating the heating output and/or the heating temperature and/or domestic-water temperature, characterized in that at least one connection unit (12), a regulating unit (14) and a heating unit (16) are designed as independent structural units which can be connected one beneath the other mainly by means of plug-in elements (24, 32, 34, 38, 40, 48, 50, 52, 114, 124, 185), can be exchanged individually and are dimensioned and arranged such that, even if they have different output levels or are of different designs, they have at least the same basic surface area (26).

2. Heating appliance according to Claim 1, characterized in that the connection unit (12) for internal and external connections has at least one gas connection (30), connections (30, 32, 50, 156, 158, 160, 162) for flow and return and cold water and hot water, an electrical connection (40, 52) and receiving means (24) for further structural units.

3. Heating appliance according to Claim 2, characterized in that, with the exception of the gas connection (30), the further connections (32, 40, 50, 52, 156, 158, 160, 162) are designed as plug-in connections.

4. Heating appliance according to Claim 2, characterized in that the connection unit (12) bears further structural units, and in that there are provided retaining elements (34, 36, 38) which permit fastening of further structural units and fastening of the connection unit on a wall (28).

5. Heating appliance according to one the preceding claims, characterized in that the regulating unit (14) has at least one operating panel (22), a regulating electronics unit, mechanical actuating members (42) and connections (40, 52) for sensors, actuators and power supply.

6. Heating appliance according to Claim 5, characterized in that the regulating unit (14) can be plugged onto the connection unit (12) and, during the plugging-on operation, the connections (40) are closed.

7. Heating appliance according to one of the preceding claims, characterized in that the heating unit (16) has a receiving means for a burner (92, 132), one or more heat exchangers (104, 118, 138, 184, 190), a combustion chamber (76), means (10, 66, 70, 72) for channelling the combustion air, and means (156, 158, 186) for channelling the heating and/or domestic water.

8. Heating appliance according to Claim 7, characterized in that the means (19, 158, 186) for channelling the heating and/or domestic water are combined to form a hydraulic unit (46) which can be plugged onto the connection unit (12) and also receives components such as a changeover valve (180) and heating-water pump (182).

9. Heating appliance according to Claim 8, characterized in that the hydraulic unit (46) has a connection for an expansion tank (150).

10. Heating appliance according to Claim 7, characterized in that the heating unit (16) has a storage tank (88) which encloses the combustion chamber (76) and is terminated by an expansion tank in the form of a cover.

11. Heating appliance according to Claim 7, characterized in that the combustion-air is supplied between the storage tank (88), which encloses the combustion chamber (76), and an outer casing.

12. Heating appliance according to Claim 7, characterized in that the heating unit (16) is of cylindrical design and has arranged in its centre a cylindrical burner (92, 132) which is enclosed by a coiled heat exchanger (104, 138, 184, 190).

13. Heating appliance according to Claim 12, characterized in that the heat exchanger (104) is of multistage construction, with at least a first stage comprising smooth pipe (106) and closely abutting coils for receiving radiation heat, and a second stage comprising a pipe (108) which is ribbed or is provided with lamellae and is intended for receiving the heat from the combustion gases.

14. Heating appliance according to Claim 13, characterized in that the heat exchanger has a third stage comprising a corrosion-resistant pipe (112) for receiving condensation heat.

15. Heating appliance according to Claim 12, characterized in that a further coiled heat exchanger (118) is provided for domestic-water heating and encloses the first heat exchanger (104, 138) cylindrically.

16. Heating appliance according to one of Claims 12 to 15, characterized in that the first and/or second heat exchanger (104, 118, 138, 184, 190) can be plugged to the hydraulic unit (46) and exchanged individually.

17. Heating appliance according to Claim 7 or 12, characterized in that the burner (92, 132) is fastened in an axially displaceable manner in the combustion chamber (76) by means of pin-like retaining elements (142), in that the combustion gases are deflected in the combustion chamber (76) and collected beneath the burner (92, 132), and displacement of the burner (92, 132) can produce an annular gap (130) which can be varied in size and by way of which the combustion gases are directed past the heat exchanger (104, 138, 184).

18. Heating appliance according to Claim 7 or 12, characterized in that the burner (92, 132) is fastened in an axially displaceable manner in the combustion chamber (76) by means of pin-like retaining elements (142), in that the combustion gases are deflected in the combustion chamber (76) and collected beneath the burner (92, 132), and displacement of the burner (92, 132) can produce through-passages (144) which can be varied in size and by way of which combustion gases can be fed to the combustion process again.

19. Heating appliance according to one of the preceding claims, characterized by a domestic-water storage tank (18) which is designed as a stand and can be plugged onto the further structural units.

## Revendications

1. Appareil de chauffage pour le chauffage de volume et la préparation d'eau sanitaire, comprenant un brûleur, un échangeur de chaleur recevant les gaz de combustion, un réseau interne de conduite, des moyens pour guider l'air d'alimentation et les fumées et des moyens pour réguler la puissance de chauffage et/ou la température de l'eau de chauffage et/ou celle de l'eau sanitaire,
caractérisé en ce qu'
au moins un élément de branchement (12), un élément de régulation (14) et un élément de chauffage (16) sont réalisés sous la forme d'éléments de construction, indépendants, susceptibles d'être reliés principalement par des éléments d'enfichage (24, 32, 34, 38, 40, 48, 50, 52, 114, 124, 185), qui peuvent être échangés séparément et dont les dimensions et la disposition sont choisies pour avoir des puissances ou des types de conception différents au moins pour la même surface de base (26).

2. Appareil de chauffage selon la revendication 1,
caractérisé en ce que
l'élément de branchement (12) comporte pour les branchements internes et externes, au moins un raccord de gaz (30), des raccords (30, 32, 50, 156, 158, 160, 162) pour l'aller et le retour de l'eau de chauffage ainsi que pour l'eau froide et l'eau chaude, un raccord électrique (40, 52) et des moyens de réception (24) pour d'autres éléments de construction.

3. Appareil de chauffage selon la revendication 2,
caractérisé en ce qu'
à l'exception du raccord de gaz (30), les autres raccords (32, 40, 50, 52, 156, 158, 160, 162) sont réalisés sous la forme de liaisons par enfichage.

4. Appareil de chauffage selon la revendication 2,
caractérisé en ce que
l'élément de branchement (12) reçoit et porte d'autres éléments et des éléments de fixation (34, 36, 38) sont prévus qui permettent la fixation d'autres éléments de construction ainsi que la fixation de l'élément de branchement sur un mur (28).

5. Appareil de chauffage selon l'une des revendications précédentes,
caractérisé en ce que
l'élément de régulation (14) comporte au moins un tableau de commande (22), une électronique de régulation, des organes de réglage mécanique (42) ainsi que des moyens de raccordement (40, 52) pour des capteurs, des actionneurs et pour l'alimentation en énergie.

6. Appareil de chauffage selon la revendication 5,
caractérisé en ce que
l'élément de régulation (14) peut être enfiché sur l'élément de branchement (12) et les raccords (40) sont fermés par ce branchement.

7. Appareil de chauffage selon l'une des revendications précédentes,
caractérisé en ce que
l'élément de chauffage (16) comporté un logement pour un brûleur (92, 132), un ou plusieurs échangeurs de chaleur (104, 118, 138, 184, 190), une chambre de combustion (76) des moyens (10, 66, 70, 72) pour conduire l'air de combustion et des moyens (156, 158, 186) pour conduire l'eau de chauffage et/ou l'eau sanitaire.

8. Appareil de chauffage selon la revendication 7,
caractérisé en ce que
les moyens (19, 158, 186) pour conduire l'eau de chauffage et/ou l'eau sanitaire sont réunis dans un élément hydraulique (46) qui se monte sur l'élément de branchement (12) et reçoit également les composants tels qu'une vanne d'inversion (180) et une pompe à eau chaude (182).

9. Appareil de chauffage selon la revendication 8,
caractérisé en ce que
l'élément hydraulique (46) comporte un branchement pour un vase d'expansion (150).

10. Appareil de chauffage selon la revendication 7,
caractérisé en ce que
l'élément de chauffage (16) comporte un réservoir (88) qui entoure la chambre de combustion (76), et qui est fermé par un couvercle en forme de vase d'expansion.

11. Appareil de chauffage selon la revendication 7,
caractérisé en ce que
l'alimentation en air comburant se fait entre le réservoir (88) qui entoure la chambre de combustion (76) et une enveloppe extérieure.

12. Appareil de chauffage selon la revendication 7,
caractérisé en ce que
l'élément de chauffage (12) est de forme cylindrique et reçoit en son centre un brûleur cylindrique (92, 132) entouré par un échangeur de chaleur (104, 138, 184, 190) en serpentin.

13. Appareil de chauffage selon la revendication 12,
caractérisé en ce que
l'échangeur de chaleur (104) est à plusieurs étages et comprend au moins un premier étage formé d'un tube lisse (106) à spires jointives pour recevoir la chaleur rayonnée et un second étage formé d'un tube à lamelles ou à nervures (108) pour recevoir la chaleur de convection des gaz de combustion.

14. Appareil de chauffage selon la revendication 13,
caractérisé en ce que
l'échangeur de chaleur comporte un troisième étage formé d'un tube (112) résistant à la corrosion pour recevoir la chaleur de condensation.

15. Appareil de chauffage selon la revendication 12,
caractérisé par
un autre échangeur de chaleur (118) en forme de serpentin pour chauffer l'eau sanitaire, et qui entoure de manière cylindrique le premier échangeur de chaleur (104, 138).

16. Appareil de chauffage selon l'une des revendications 12 à 15,
caractérisé en ce que
le premier et/ou le second échangeur de chaleur (104, 118, 138, 184, 190) sont reliés par enfichage à l'élément hydraulique (46) et peuvent être remplacés séparément.

17. Appareil de chauffage selon la revendication 7 ou 12,
caractérisé en ce que
le brûleur (92, 132) est fixé de manière coulissante axialement dans la chambre de combustion (76) à l'aide d'éléments de fixation (142) en forme de tige et les gaz de combustion sont déviés dans la chambre de combustion (76) et sont collectés en dessous du brûleur (92, 132) et en coulissant le brûleur (92, 132) on forme un intervalle annulaire (130) d'importances variables à travers lesquelles peuvent passer les gaz de combustion pour court-circuiter l'échangeur de chaleur (104, 138, 184).

18. Appareil de chauffage selon la revendication 7 ou 12,
caractérisé en ce que
le brûleur (92, 132) est fixé de manière coulissante axialement à l'aide d'éléments de fixation (142) en forme de tiges dans la chambre de combustion (76) et les gaz de combustion sont déviés dans la chambre de combustion (76) et sont recueillis en dessous du brûleur (92, 132) et en déplaçant le brûleur (92, 132) on forme des passages (144) de dimensions variables à travers lesquelles les gaz de combustion peuvent être réintroduits dans le processus de combustion.

19. Appareil de chauffage selon l'une des revendications précédentes,
caractérisé en ce qu'
un réservoir d'eau sanitaire (18) réalisé en forme de pied, reçoit les autres éléments de construction.
